# EUROPÄISCHE PATENTSCHRIFT

(11) **EP 3 083 314 B1**
(45) Veröffentlichungstag und Bekanntmachung des Hinweises auf die Patenterteilung: **14.02.2018**
(21) Anmeldenummer: 13819018.6
(22) Anmeldetag: 18.12.2013
(51) Int. Cl.: B60K 23/04

(54) **AUSGLEICHSEINHEIT EINES KRAFTFAHRZEUGS SOWIE VERFAHREN ZU DEREN STEUERUNG**
DIFFERENTIAL UNIT OF A MOTOR VEHICLE AND METHOD FOR CONTROLLING SAME
UNITÉ DIFFÉRENTIELLE D'UN VÉHICULE AUTOMOBILE ET SON PROCÉDÉ DE COMMANDE

(43) Veröffentlichungstag der Anmeldung: 26.10.2016
(73) Patentinhaber: GKN Automotive Limited, Redditch Worcestershire B98 0AJ (GB)
(72) Erfinder: HÖCK, Michael, 53819 Neunkirchen-Seelscheid (DE); NIEßEN, Harwin, 50354 Hürth (DE)
(74) Vertreter: Bungartz Christophersen Partnerschaft mbB Patentanwälte
(86) Internationale Anmeldenummer: PCT/EP2013/077248
(87) Internationale Veröffentlichungsnummer: WO 2015/090392

(56) Entgegenhaltungen:
- EP-A1- 2 116 411
- DE-A1- 4 021 747
- DE-A1- 4 039 391
- DE-A1-102007 030 091

## Beschreibung

Die Erfindung betrifft ein System zur Ansteuerung einer differentiallosen, kupplungsgesteuerten Ausgleichseinheit eines Kraftfahrzeugs, insbesondere eines Personenkraftwagens, nach dem Oberbegriff des Anspruchs 1, insbesondere eine Quer-Ausgleichseinheit, sowie ein Verfahren zur Steuerung einer solchen Ausgleichseinheit nach dem Oberbegriff des Anspruchs 5. Die Erfindung betrifft außerdem ein Computerprogrammprodukt, das eine elektronische Steuereinheit zur Steuerung einer derartigen Ausgleichseinheit dazu veranlasst, die Ausgleichseinheit nach dem erfindungsgemäßen Verfahren anzusteuern.

Derartige Ausgleichseinheiten und Systeme und Verfahren zu deren Betrieb sind zum Beispiel aus der EP 2 116 411 A1, der DE 10 2007 030 091 A1 oder der DE 40 39 391 A1 bekannt. Hierbei werden jeweils zwei separat ansteuerbare Steuerventile dazu verwendet, die erste bzw. zweite Kupplung gezielt mit einem bestimmten Steuerdruck anzusteuern, um das von der jeweiligen Kupplung auf das zugeordnete Antriebsrad übertragbare Kupplungsmoment fahrzustandsabhängig zu beeinflussen. Diese Ausgestaltungen ermöglichen es insbesondere, das rechte und linke Antriebsrad mit unterschiedlichen Drehmomenten zu beaufschlagen und in annähernd jeder denkbaren Fahrsituation die gewünschte Leistungs- bzw. Momentenverteilung auf die beiden Antriebsräder einer Achse einzustellen.

Nachteilig an den vorstehend genannten Systemen und Verfahren ist allerdings deren Komplexität. Sie erfordern komplexe und potentiell störungsanfällige Hard- und Software. Der Entwicklungs- und Applikationsaufwand bei einem Fahrzeug ist außerordentlich hoch. Berücksichtigt man ferner, dass derartige Systeme und Verfahren in der Regel als Allradmodule für Fahrzeuge mit abschalt- bzw. zuschaltbarem Allradantrieb vorgesehen werden und der tatsächliche Fahranteil im Allradbetrieb während der Lebensdauer eines Fahrzeugs typischerweise sehr gering ist, wird der Aufwand für die Entwicklung- und Applikation eines solchen Systems und Verfahrens von den Herstellern nicht selten für zu hoch und für zu kostspielig angesehen. Dies gilt insbesondere für Hersteller von Fahrzeugen unterhalb des Premiumsegments und von Fahrzeugtypen, die nicht aufgrund ihrer Bestimmung besonderen Bedarf an derartig komplexen Systemen haben, wie es zum Beispiel bei Geländefahrzeugen der Fall sein kann.

Um einen einfacheren Aufbau und einfachere Regelungsmechanismen zu ermöglichen, sieht eine in der DE 40 21 747 A1 offenbarte Antriebsanordnung eine Doppelkupplungsanordnung vor, deren Lamellensätze über eine gemeinsame Betätigungseinrichtung mit gleichen Betätigungskräften beaufschlagbar sind. Diese Offenbarung beschreibt als Betätigungseinrichtung lediglich einen mechanischen Spreizmechanismus im Detail, der aber unter anderem aufgrund seiner mechanischen Komplexität, seines Bauraumbedarfs und seines nur einseitigen Wirkens auf die Doppelkupplungsanordnung als nachteilig anzusehen ist. 0b und falls ja, wie die Doppelkupplungsanordnung fahrzustandsabhängig angesteuert werden kann, lässt die Offenbarung hingegen offen.

Aufgabe der Erfindung ist es daher, ein System zum Betreiben einer differentiallosen Ausgleichseinheit der eingangs genannten Art und ein Verfahren zum Betreiben einer solchen Ausgleichseinheit anzugeben, die in ihrer Komplexität gegenüber den bekannten Systemen und Verfahren deutlich reduziert sind und trotzdem ein in allen wesentlichen Belangen zufriedenstellendes Antriebskonzept darstellen. Insbesondere wird ein Antriebskonzept mit zuschaltbaren Allradantrieb ins Auge gefasst. Es soll ein Weg gefunden werden, die bekannten Systeme und Verfahren durch Reduzierung des technischen Aufwands "abzurüsten", unter anderem auch mit dem Ziel, die Systeme und Verfahren auch für Fahrzeughersteller von Fahrzeugen unterhalb des Premiumsegments attraktiv zu machen.

Diese Aufgabe wird bezüglich des Systems zum Betreiben einer Ausgleichseinheit dadurch gelöst, dass das System eine Hydraulikpumpe umfasst, die Stellgröße hydraulischer Druck ist und das System derart eingerichtet ist, dass die Veränderung der Stellgröße während des Fahrzeugbetriebs fahrzustandsabhängig und gezielt über eine Änderung der Drehzahl der Hydraulikpumpe einstellt wird. Auch hinsichtlich des Verfahrens zum Betreiben einer Ausgleichseinheit ist erfindungsgemäß vorgesehen, dass die Stellgröße hydraulischer Druck ist und die Veränderung der Stellgröße während des Fahrzeugbetriebs fahrzustandsabhängig und gezielt über die Änderung der Drehzahl einer Hydraulikpumpe erfolgt.

Dass die erste Kupplung und die zweite Kupplung durch Veränderung einer Stellgröße während des Fahrzeugbetriebs fahrzustandsabhängig und gezielt eingestellt werden können, um ein bestimmtes Dreh- bzw. Kupplungsmoment übertragen zu können, bedeutet, dass die für das übertragbare Kupplungsmoment zuständige Stellgröße derart veränderlich ist, dass das von den Kupplungen übertragbare Kupplungsmoment sowohl derart eingestellt werden kann, dass kein Schlupf auftritt (die Kupplungen sind mit voller Einrückkraft geschlossen, das maximal vorgesehene Kupplungsmoment ist übertragbar), als auch derart eingestellt werden kann, dass unendlich Schlupf auftritt (die Kupplungen sind geöffnet, es wird kein nennenswertes Kupplungsmoment übertragen), als auch gezielt derart eingestellt werden kann, das ein zwischen den beiden vorstehend genannten Grenzzuständen liegender Kupplungsschlupf an zumindest einer Kupplung auftritt (die Kupplungen sind nicht mit voller Einrückkraft geschlossen aber auch nicht voll geöffnet, um an zumindest einer der beiden Kupplungen gezielt ein bestimmtes Kupplungsmoment zu generieren oder gezielt einen begrenzten Schlupf zuzulassen).

Das vorstehend beschriebene System bzw. das vorstehend beschriebene Verfahren vereinfacht die aus dem Stand der Technik bekannten Systeme erheblich. Zum einen können zusätzlich Steuerungselemente wie Drucksteuerventile und ähnliches entfallen. Auch muss die zu entwickelnde Steuersoftware nicht mehr die Ansteuerung von getrennten Steuergliedern gewährleisten können und ein Großteil der bisher einzusetzenden Messtechnik entfällt. Aus demselben Grund wird auch die Applikation eines solchen Systems im Fahrzeug wesentlich einfacher, weil für die verschiedenen Fahrzustände keine Drehmomentverteilungen mehr zu berücksichtigen sind, bei denen beide Kupplungen und damit beide Antriebsräder einer Achse unterschiedlich angesteuert werden.

Zur Betätigung der ersten Kupplung und zur Betätigung der zweiten Kupplung ist bevorzugt jeweils ein gesonderter Kupplungsaktuator vorgesehen, auf den die Stellgröße wirkt, um die Kupplungen zu betätigen. Die Einstellung der Höhe der auf beide Kupplungen wirkenden Stellgröße erfolgt dabei bevorzugt über eine einzige Stellgrößeneinheit. Die Stellgrößeneinheitist die Einheit, die die Stellgröße zur Betätigung der Kupplungsaktuatoren zur Verfügung stellt. Die Stellgrößeneinheit ist eine Hydraulikpumpe, die hydraulischen Druck als Stellgröße zur Verfügung stellt.

Das System umfasst eine drehzahlgeregelte Hydraulikpumpe und die Stellgrößenveränderung erfolgt über die Änderung der Drehzahl der Hydraulikpumpe. Diese Ausgestaltung ermöglicht eine zentrale Erzeugung und Veränderung der Stellgröße. Da Druck außerdem weitgehend verlustfrei und insbesondere gleichmäßig "übertragen" werden kann, ist gewährleistet, dass die Stellgröße an beiden Kupplungen stets identisch ist, also stets und unabhängig von der Fahrsituation immer der gleiche Druck an jeder der beiden Kupplungen anliegt.

Die vorstehenden Ausführungen verdeutlichen, dass das System ein System ohne Individualsteuerglieder ist, über die die Stellgröße für die erste Kupplung in einer ersten Höhe und die Stellgröße für die zweite Kupplung in einer von der ersten Höhe unterschiedlichen zweiten Höhe kupplungsindividuell bereitgestellt werden könnte, wenn diese denn vorgesehen wären. Besonders dieser bewusste Verzicht auf Individualsteuerglieder, insbesondere der Verzicht auf für jede Kupplung gesondert vorzusehende hydraulische Drucksteuerventile, und damit der Verzicht auf die notwendige separate und individuelle Ansteuerung derartiger Steuerglieder ist es, mit dem eine wesentliche Vereinfachung gegenüber dem Stand der Technik erzielt werden kann.

Bei Verwendung einer Hydraulikpumpe als Stellgrößeneinheit wird der von der Hydraulikpumpe erzeugte Druck also ohne Zwischenschaltung weiterer, der Hydraulikpumpe nachgeordneter Drucksteuerventile sowohl auf die erste Kupplung also auch auf die zweite Kupplung weitergeleitet.

Gleichwohl ist zu vermeiden, dass sich der Antriebsstrang bei Kurvenfahrt verspannt, was einen Drehzahlausgleich zwischen dem kurveninneren und dem kurvenäußeren Antriebsrad erfordert. Auch kann das System bzw. das Verfahren eingesetzt werden, um den Fahrer in kritischen Fahrsituationen gezielt zu unterstützen oder um kritische Fahrsituationen gezielt zu vermeiden. Um dies zu gewährleisten werden die üblicherweise auf dem CAN-Bus des Fahrzeugs liegenden Daten wie Raddrehzahlen oder Lenkeinschlag oder sonstige relevante Fahrzustandsdaten eingelesen und in die Berechnung der im jeweiligen Fahrzustand erforderlichen Kupplungsbetätigungskraft einbezogen.

Es kann vorgesehen sein, dass der Berechnung der Stellgröße bei Kurvenfahrt das Kraftschlusspotential des kurveninneren Antriebsrades zugrunde gelegt wird. Dies führt dazu, dass die das kurvenäußere Antriebsrad antreibende Kupplung Schlupf zulässt, um ein Verspannen des Antriebsstrangs zu vermeiden.

In einer erweiterten Ausgestaltung kann vorgesehen sein, dass der Berechnung der Stellgröße bei Kurvenfahrt nur dann das Kraftschlusspotential des kurveninneren Rades zugrunde gelegt wird, solange ein bestimmter Querbeschleunigungsschwellwert nicht überschritten wird. Oberhalb des Querbeschleunigungsschwellwertes wird dann bei der Berechnung der Stellgröße bei Kurvenfahrt das Kraftschlusspotential des kurvenäußeren Rades zugrunde gelegt. Dies erhöht die Traktion und erlaubt höhere Kurvengeschwindigkeiten.

Beim Beschleunigen aus dem Stand kann ein System zur Erkennung unterschiedlicher Kraftschlusspotentiale der Antriebsräder zum Einsatz kommen (µ-split Erkennung), bei der sich die Berechnung der Stellgröße maßgeblich an dem Kraftschlusspotential des Antriebsrads mit dem höheren Kraftschlusspotential orientiert (µ-high Regelung). Hier würde die Ausgleichseinheitwie ein Sperrdifferential wirken.

Um bei höheren Geschwindigkeiten kritische Fahrsituationen zu vermeiden, die entstehen können, wenn das Antriebsrad einer Hinterachse, das das höhere Kraftschlusspotential aufweist, übermäßig zum Vortrieb beiträgt und das Fahrzeug somit drängt, um die Hochachse zu drehen, kann bei zunehmender Fahrzeuggeschwindigkeit bei der Berechnung der Stellgröße eine µ-high Regelung von einer µ-low Regelung überlagert werden, bei der das Kraftschlusspotential des Antriebsrads mit dem geringeren Kraftschlusspotential maßgeblich für die Berechnung der Stellgröße ist. Hierdurch wird die Fahrstabilität bei höheren Geschwindigkeiten verbessert. Eine µ-low Regelung für insbesondere höhere Fahrzeuggeschwindigkeiten (zum Beispiel größer 50 km/h) kann selbstverständlich auch ohne das Vorhandensein einer für das Anfahren oder für niedrige Fahrzeuggeschwindigkeiten vorgesehene µ-high Regelung vorgesehen werden.

Ebenfalls zur Erfindung gehörig werden die Ausgleichseinheit an sich sowie ein Antriebsstrang mit einer solchen Ausgleichseinheit angesehen, die jeweils über ein System zum Betreiben der Ausgleichseinheit wie vor- und nachstehend erläutert verfügen. Auch wird eine elektronische Steuereinheit (ECU), in deren Programmspeicher ein Computerprogrammprodukt gespeichert ist, das zur Ausführung des vor- und nachstehend erläuterten Verfahrens eingerichtet ist, als zur Erfindung gehörig angesehen.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: eine im Stand der Technik bekannte kupplungsgesteuerte, differentiallose Ausgleichseinheit mit einer Steuereinrichtung in schematischer Darstellung,
- Fig. 2: eine erfindungsgemäß vereinfachte Ausgleichseinheit mit einer Steuereinrichtung, und
- Fig. 3: eine zu der in Figur 2 gezeigten Ausgleichseinheit alternative Ausgleichseinheit, bei der ein einziger Antriebslamellenträger für beide Ausgangsglieder vorgesehen ist.

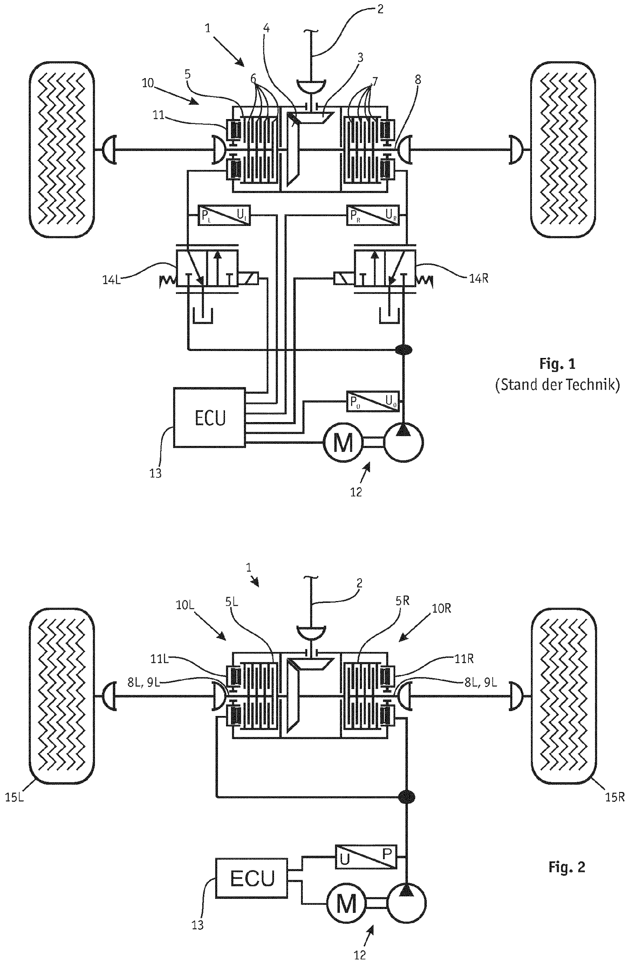

In Figur 1 ist eine aus dem Stand der Technik bekannte Ausgleichseinheit 1 zusammen mit dem System zu deren Betrieb in einer schematischen Ansicht gezeigt. Der nachfolgend beschriebene symmetrische Grundaufbau der Ausgleichseinheit mit den beiden Kupplungseinheiten 10 trifft auf den in Figur 2 gezeigten Aufbau in gleicher Weise zu. Die einem in den Figuren angegebenen bestimmten Bezugszeichen zugeordneten Buchstaben "L" und "R" stehen für das jeweils linke ("L") oder rechte ("R") Bauteil des symmetrischen Grundaufbaus.

Die Antriebleistung des Fahrzeugantriebs wird über ein Eingangsglied 2, typischerweise eine Kardanwelle, und ein damit verbundenes Antriebsrad 3 auf ein Tellerrad 4 weitergeleitet und von dort auf einen linken bzw. rechten Antriebslamellenträger 5 übertragen, dem jeweils axial verschieblich angeordnete Antriebslamellen 6 drehfest zugeordnet sind. Diese Antriebslamellen wirken mit linken bzw. rechten Abtriebslamellen 7 zusammen, die wiederum mit einem linken bzw. rechten Ausgangs- bzw. Abtriebsglied 8 drehfest zusammenwirken und auf einem linken bzw. rechten Abtriebslamellenträger 9 axialverschieblich aber drehfest angeordnet sind. Die so gebildete linke bzw. rechte Kupplungseinheit 10 stellt eine grundsätzlich bekannte Lamellenkupplung dar.

Sowohl der rechten Kupplungseinheit als auch der linken Kupplungseinheit ist jeweils ein bevorzugt hydraulisch zu betätigender Kupplungsaktuator 11 zugeordnet, wobei alternativ zu einer hydraulischen Kupplungsbetätigung auch andere Kupplungsbetätigungsmechanismen sinnvoll einsetzbar sind, insbesondere elektromechanische, elektromagnetische, elektrohydraulische oder pneumatische Kupplungsbetätigungsmechanismen. Über diesen Kupplungsaktuator werden die Kupplungseinheiten angesteuert und über die Stellgröße "hydraulischer Druck" wird für jede der Kupplungen der Kupplungsdruck, also die Andrückkraft, mit der die Ab- bzw. Antriebslamellen aneinander gedrückt werden, beeinflusst, so dass sich das von den Kupplungen übertragbare Moment gezielt einstellen lässt. Bei nicht mittels hydraulischem Druck arbeitenden Kupplungsbetätigungsmechanismen wäre die Stellgröße - je nach gewähltem Mechanismus - zum Beispiel eine mechanische Kraft, Stromstärke, elektrische Spannung oder pneumatischer Druck.

In den Figuren ist der drehfest mit dem Eingangsglied 2 gekoppelte Antriebslamellenträger 5 als Außenlamellenträger und der drehfest mit den Antriebsrädern gekoppelte Abtriebslamellenträger als Innenlamellenträger ausgeführt. Diese Ausgestaltung kann selbstverständlich auch umgekehrt werden.

In Figur 1 ist ein System zum Betreiben und Ansteuern der linken bzw. rechten Kupplungseinheit gezeigt, bei dem die linke bzw. rechte der beiden Kupplungen 10 fahrzustandsunabhängig individuell mit einem unterschiedlichen Druck p_{L} bzw. p_{R} angesteuert werden kann. Zum Ansteuern der linken und rechten Kupplung kann also, je nach Fahrsituation, die Stellgröße "hydraulischer Druck" jeweils in unterschiedlicher Höhe verwendet werden. Dies hat den Vorteil, dass der von einer hydraulischen, motorbetriebenen Pumpeinheit 12 erzeugte Ausgangsdruck p₀ je nach Fahrzustand optimal auf die beiden Kupplungen wirken kann, um dem linken bzw. rechten Antriebsrad genau das Antriebsmoment bzw. die Antriebsleistung zuzuweisen, die für den jeweiligen Fahrzustand und das gewünschte Fahrverhalten als optimal angesehen werden. So lässt sich in verschiedenen Fahrsituationen die Traktion oder die Fahrdynamik gezielt beeinflussen.

Wie in Figur 1 erkennbar ist das System aufwendig. Eine elektronische Steuereinheit 13 erfasst die im System vorliegenden Drücke p₀, p_{L} und p_{R} und steuert basierend auf hinterlegten Kennfeldern und unter Berücksichtigung von Fahrzustandsdaten (Radgeschwindigkeiten, Beschleunigungskräften, Fahrzeugneigung, Geschwindigkeit, Lenkwinkel, etc.) die linke bzw. rechte Kupplung über zwei unabhängig voneinander agierende Steuerventile 14 individuell an. Die Entwicklung der hierfür erforderlichen Regelalgorithmen und die serienreife Applikation eines solchen Systems im Fahrzeug sind aufwendig, langwierig und teuer. Durch die Vielzahl der zu verwendenden Bauteile für Steuerung und Sensorik besteht ein vergrößertes Potential von Störungen und Bauteilausfällen. Für solche Fälle sind zudem Rückfalloptionen zu implementieren, die das ungewollte Herbeiführen nicht mehr sicherer Fahrzustände sicher ausschließt.

In Figur 2 ist ein hierzu alternatives System zum Betreiben der ansonsten gegenüber Figur 1 unveränderten Kupplungseinheiten 10 gezeigt. Figur 2 verdeutlicht dabei schon zeichnerisch, dass das System eine wesentliche Vereinfachung darstellt. Hierbei wird nicht nur auf die individuell unterschiedliche Ansteuerung der linken und rechten Kupplung verzichtet, sondern es wird insgesamt auf die Verwendung von Steuergliedern wie Steuerventilen sowie auf Sensorik verzichtet.

Die vom System veränderlich erzeugbare Stellgröße wird fahrzustandsunabhängig, also unabhängig von der jeweiligen Fahrsituation, stets in gleicher Höhe sowohl auf die linke als auch auf die rechte Kupplung übertragen. Somit ist zwar das von beiden Kupplungen übertragbare Kupplungsmoment veränderlich, jedoch für beide Kupplungen immer gleich. Dies schränkt zwar die Möglichkeiten, die eine Ausgestaltung nach Figur 1 bietet, ein, führt aber zu einer erheblich einfacheren, kostengünstigeren und leichter zu applizierenden Ausführung, die immer noch ein zufriedenstellendes Fahrverhalten und ausreichende Einflussmöglichkeiten auf Traktion und Fahrverhalten bietet. Berücksichtigt man ferner, dass bei Fahrzeugen mit zuschaltbarem Allradantrieb die Fahranteile, in denen das Fahrzeug über seine Lebensdauer hinweg tatsächlich im Allradmodus betrieben werden, außerordentlich gering sind, bietet die Erfindung die Möglichkeit, auch Fahrzeuge mit einem zuschaltbaren Allradantrieb auszustatten, bei denen der Einsatz eines Systems, wie es in Figur 1 schematisch dargestellt wird, ansonsten als zu aufwendig empfunden wird.

Bei dem gegenüber dem System nach Figur 1 vereinfachten System nach Figur 2 ist insbesondere vorgesehen, dass die "Versorgung" der ersten und zweiten Kupplung mit der die Andrückkraft der Kupplungslamellen beeinflussenden Stellgröße ohne weitere Steuerglieder wie Steuerventile und damit "steuerventillos" erfolgt, im Falle der Verwendung einer Hydraulikpumpe also insbesondere ohne der Hydraulikpumpe nachgeschaltete Individualsteuerglieder. Die Höhe der Stellgröße "Hydraulikdruck" wird in dem in Figur 2 gezeigten Fall über die Pumpleistung der hydraulischen Pumpeinheit reguliert, insbesondere über deren mit der Drehzahl veränderlichen Förderleistung. Im Falle andersartiger Kupplungsbetätigungsmechanismen gilt diese Aussage natürlich für die dann zu beeinflussende Stellgröße gleichermaßen.

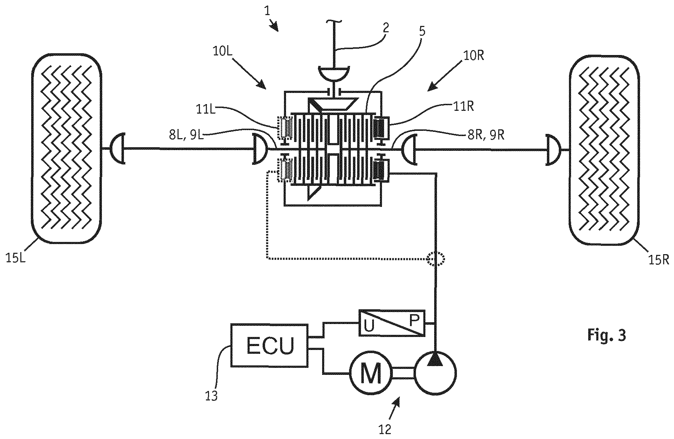

Figur 3 zeigt eine alternative Ausgestaltung der in Figur 2 gezeigten Ausgleichseinheit. Hierbei teilen sich die beiden Ausgangsglieder 8 bzw. Abtriebslamellenträger 9 einen gemeinsamen Antriebslamellenträger 5, was eine sehr kompakte Bauform ermöglicht.

Die gestrichelte, zum linken Kupplungsaktuator 11L führende Linie und die gestrichelte Darstellung des linken Kupplungsaktuators selbst soll verdeutlichen, dass dieser wahlweise vorgesehen werden kann. Denn für den Fall, dass sich beide Kupplungsseiten der Ausgleichseinheit einen Antriebslamellenträger 5 teilen, muss nur auf einer Seite ein Kupplungsaktuator 11R vorgesehen werden. Auf der dem Kupplungsaktuator abgewandten Seite ist lediglich eine axiale Abstützung vorzusehen, mit der die axialen Kupplungskräfte abgestützt werden.

Nachteilig an einer solchen Ausgestaltung kann jedoch sein, dass die Kupplungskräfte bei zunehmender Lamellenanzahl auf der dem Kupplungsaktuator abwandten Seite der Kupplungseinheit nicht hinreichend wirken, weil bei einer Verschiebung der einzelnen Lamellen unter Last hohe axiale Reibkräfte an den Verzahnungen auftreten, die dem axialen Verschieben der Kupplungslamellen entgegenwirken. Sofern erforderlich, kann daher wie auch in Figur 2 wahlweise auch auf einen zweiten Kupplungsaktuator zurückgegriffen werden.

### Bezugszeichenliste

- 1: Ausgleichseinheit
- 2: Eingangsglied
- 3: Antriebsrad
- 4: Tellerrad
- 5: Antriebslamellenträger
- 6: Antriebslamellen
- 7: Abtriebslamellen
- 8: Ausgangsglied
- 9: Abtriebslamellenträger
- 10: Kupplungseinheit
- 11: Kupplungsaktuator
- 12: hydraulische Pumpeinheit
- 13: elektronische Steuereinheit
- 14: Individualsteuerglieder
- 15: Antriebsräder
- L/R: Links/Rechts

## Patentansprüche

1. System zur Ansteuerung einer differentiallosen Ausgleichseinheit (1) einer zumindest zeitweise antreibbaren Achse eines Kraftfahrzeugs, wobei die Ausgleichseinheit (1)
- ein Eingangsglied (2)
- ein erstes Ausgangsglied (8L), das über eine erste reibschlüssige Kupplung (10L) mit dem Eingangsglied (2) gekoppelt werden kann, um Antriebsleistung auf ein erstes Antriebsrad (15L) zu übertragen, und
- ein zweites Ausgangsglied (8R), das über eine zweite reibschlüssige Kupplung (10R) mit dem Eingangsglied (2) gekoppelt werden kann, um Antriebsleistung auf ein zweites Antriebsrad (15R) zu übertragen,
wobei eine Steuereinrichtung vorgesehen ist, mittels der die von der ersten Kupplung (10L) und der zweiten Kupplung (10R) übertragbaren Kupplungsmomente durch Veränderung einer Stellgröße eingestellt werden können, und die Steuereinrichtung derart eingerichtet ist, dass die erste Kupplung (10L) und die zweite Kupplung (10R) fahrzustandsunabhängig mit derselben veränderlichen Stellgröße in gleicher Höhe angesteuert sind, **dadurch gekennzeichnet, dass** das System eine Hydraulikpumpe (12) umfasst, die Stellgröße hydraulischer Druck ist und das System derart eingerichtet ist, dass die Veränderung der Stellgröße während des Fahrzeugbetriebs fahrzustandsabhängig und gezielt über eine Änderung der Drehzahl der Hydraulikpumpe (12) eingestellt werden kann.

2. System nach dem vorhergehenden Anspruch, **dadurch gekennzeichnet, dass** zur Betätigung der ersten Kupplung (10L) und zur Betätigung der zweiten Kupplung (10R) ein Kupplungsaktuator (11L, 11R) vorgesehen ist, auf den die Stellgröße wirkt, um die Kupplungen (10L, 10 R) zu betätigen, und dass eine einzige Stellgrößeneinheit (12) vorgesehen ist, über die die Höhe der auf beide Kupplungen (10L, 10R) wirkenden Stellgröße einstellbar ist.

3. System nach einem der vorhergehenden Ansprüche, **dadurch gekennzeichnet, dass** das System ein System ohne Individualsteuerglieder (14L, 14R) ist, über die die Stellgröße für die erste Kupplung (10L) in einer ersten Höhe und die Stellgröße für die zweite Kupplung (10R) in einer von der ersten Höhe unterschiedlichen zweiten Höhe eingestelltwerden könnte.

4. Verfahren zum Betreiben einer differentiallosen Ausgleichseinheit (1) einer zumindest zeitweise antreibbaren Achse eines Kraftfahrzeugs, wobei die Ausgleichseinheit
- ein Eingangsglied (2)
- ein erstes Ausgangsglied (8L), das über eine erste reibschlüssige Kupplung (10L) mit dem Eingangsglied (2) gekoppelt werden kann, um Antriebsleistung auf ein erstes Antriebsrad (15L) zu übertragen, und
- ein zweites Ausgangsglied (8R), das über eine zweite reibschlüssige Kupplung (10R) mit dem Eingangsglied (2) gekoppelt werden kann, um Antriebsleistung auf ein zweites Antriebsrad (15R) zu übertragen,
aufweist, und wobei über eine Steuereinrichtung die übertragbaren Kupplungsmomente der ersten Kupplung (10L) und der zweiten Kupplung (10R) durch Veränderung einer Stellgröße eingestellt wird, wobei die erste Kupplung (10L) und die zweite Kupplung (10R) fahrzustandsunabhängig mit einer Stellgröße in gleicher Höhe angesteuert werden, **dadurch gekennzeichnet, dass** die Stellgröße hydraulischer Druck ist und die Veränderung der Stellgröße während des Fahrzeugbetriebs fahrzustandsabhängig und gezielt über die Änderung der Drehzahl einer Hydraulikpumpe (12) erfolgt.

5. Verfahren nach dem vorhergehenden Anspruch, **dadurch gekennzeichnet, dass** zur Betätigung der ersten Kupplung (10L) und zur Betätigung der zweiten Kupplung (10R) ein Kupplungsaktuator (11L, 11R) vorgesehen ist, auf den die Stellgröße wirkt, um die Kupplungen (10L, 10R) zu betätigen, und das Einstellen der Höhe der auf beide Kupplungen (10L, 10R) wirkenden Stellgröße über eine einzige Stellgrößeneinheit (12) erfolgt.

6. Verfahren nach einem der beiden vorhergehenden Ansprüche, **dadurch gekennzeichnet, dass** die Stellgröße ohne Zwischenschaltung weiterer Individualsteuerglieder (14), über die die Stellgröße für die erste Kupplung (10L) in einer ersten Höhe und die Stellgröße für die zweite Kupplung (10R) in einer von der ersten Höhe unterschiedlichen zweiten Höhe eingestellt werden könnte, sowohl auf die erste Kupplung (10L) als auch auf die zweite Kupplung (10R) wirkt.

7. Verfahren nach einem der drei vorhergehenden Ansprüche, **dadurch gekennzeichnet, dass** der Berechnung der Stellgröße bei Kurvenfahrt das Kraftschlusspotential des kurveninneren Rades als maßgeblich zugrunde gelegt wird.

8. Verfahren nach dem vorhergehenden Anspruch, **dadurch gekennzeichnet, dass** der Berechnung der Stellgröße bei Kurvenfahrt unterhalb eines Querbeschleunigungsschwellwerts das Kraftschlusspotential des kurveninneren Rades als maßgeblich zugrunde gelegt wird und oberhalb des Querbeschleunigungsschwellwertes bei der Berechnung der Stellgröße bei Kurvenfahrt das Kraftschlusspotential des kurvenäußeren Rades als maßgeblich zugrunde gelegt wird.

9. Verfahren nach einem der fünf vorhergehenden Ansprüche, **dadurch gekennzeichnet, dass** eine Erkennung unterschiedlicher Kraftschlusspotentiale der Antriebsräder vorgesehen ist (µ-split Erkennung) und beim Beschleunigen aus dem Stand bei der Berechnung der Stellgröße das Kraftschlusspotential des Antriebsrads mit dem höheren Kraftschlusspotential als maßgeblich für die Berechnung der Stellgröße herangezogen wird (µ-high Regelung).

10. Verfahren nach einem der vorhergehenden sechs Ansprüche, **dadurch gekennzeichnet, dass** bei höherer Fahrzeuggeschwindigkeit bei der Berechnung der Stellgröße eine µ-low Regelung vorgesehen ist, bei der das Kraftschlusspotential des Antriebsrads mit dem geringeren Kraftschlusspotential als maßgeblich für die Berechnung der Stellgröße herangezogen wird.

11. Computerprogrammprodukt, das eine elektronische Steuereinheit (13) zur Steuerung eines Systems nach einem der Ansprüche 1 bis 3 dazu veranlasst, die Ausgleichseinheit nach dem Verfahren gemäß einem der Ansprüche 4 bis 10 anzusteuern, wenn die elektronische Steuereinheit (13) im Programmcode des Computerprogrammprodukts enthaltene Programmroutinen ausführt.

12. Elektronische Steuereinheit (13) zur Steuerung einer Ausgleichseinheit nach dem Verfahren gemäß einem der Ansprüche 4 bis 10 mit einem Programmspeicher, der mit einem Computerprogrammprodukt nach dem vorhergehenden Anspruch bedatetist.

## Claims

1. System for controlling a compensation unit (1) without differential of an at least temporarily driveable axle of a motor vehicle, wherein the compensation unit (1) comprises
- an input member (2)
- a first output member (8L), which can be coupled with the input member (2) via a first friction clutch (10L) for transmitting drive power to a first drive wheel (15L), and
- a second output member (8R), which can be coupled with the input member (2) via a second friction clutch (10R) for transmitting drive power to a second drive wheel (15R),
wherein a control means is envisaged, with which the clutch torques that can be transmitted by the first clutch (10L) and the second clutch (10R) can be set by changing a correcting variable, and the control means is set up in such a way that the first clutch (10L) and the second clutch (10R) are controlled independent from the drive condition with the same adjustable correcting variable at the same height, **characterised in that** the system comprises a hydraulic pump (12), the correcting variable is hydraulic pressure, and the system is set up in such a way that changing the correcting variable can be set during driving operation independent of the driving condition and targeted by changing the rotation speed of the hydraulic pump (12).

2. System according to the preceding claim, **characterised in that** a clutch actuator (11L, 11R) on which the correcting variable acts for activating the clutches (10L, 10R) is envisaged for activating the first clutch (10L) and for activating the second clutch (10R), and **in that** a single correcting variable unit (12) is envisaged, with which the height of the correcting variable acting on the two clutches (10L, 10R) can be set.

3. System according to one of the preceding claims, **characterised in that** the system is a system without individual control members (14L, 14R), with which the correcting variable for the first clutch (10L) could be set at a first height and the correcting variable for the second clutch (10R) set at a second height that differs from the first height.

4. Method for operating a compensation unit (1) without differential of an at least temporarily driveable axle of the a motor vehicle, wherein the compensation unit comprises
- an input member (2)
- a first output member (8L), which can be coupled with the input member (2) via a first friction clutch (10L) for transmitting drive power to a first drive wheel (15L), and
- a second output member (8R), which can be coupled with the input member (2) via a second friction clutch (10L) for transmitting drive power to a second drive wheel (15R),
and wherein the transmittable clutch torques of the first clutch (10L) and the second clutch (10R) can be set via a control means by changing a correcting variable, wherein the first clutch (10L) and the second clutch (10R) can be controlled independent from the drive condition with an adjustable correcting variable at the same height, **characterised in that** the correcting variable is hydraulic pressure, and changing the correcting variable during driving operation is realised independent of the driving condition and targeted by changing the rotation speed of the hydraulic pump (12).

5. Method according to one of the preceding claims, **characterised in that** a clutch actuator (11L, 11R) is envisaged for activating the first clutch (10L) and for activating the second clutch (10R), upon which the correcting variable acts for activating the clutches (10L, 10R), and that setting the height of the correcting variable acting on both clutches (10L, 10R) is realised by means of a single correcting variable unit (12).

6. Method according to one of the two preceding claims, **characterised in that** the correcting variable could be set without interposing further individual control members (14), with which the correcting variable for the first clutch (10L) can be set at a first height and the correcting variable for the second clutch (10R) set at a second height that differs from the first height, acts upon the first clutch (10L) as well as the second clutch (10R).

7. Method according to one of the three preceding claims, **characterised in that** the calculation of the correcting variable is based on the friction potential of the inside wheel as relevant during cornering.

8. Method according to the preceding claim, **characterised in that** the calculation of the correcting variable is assumed to be below a lateral acceleration threshold value of the friction potential of the inside wheel as relevant during cornering, and above the lateral acceleration threshold value of the friction potential of the outside wheel is assumed to be relevant when calculating the correcting variable during cornering.

9. Method according to one of the five preceding claims, **characterised in that** a recognition of various friction potentials of the drive wheels is envisaged (µ split recognition) and the friction potential of the drive wheel with the higher friction potential is assumed to be relevant for the calculation of the correcting variable (µ high regulation) when accelerating from standing for the calculation of the correcting variable.

10. Method according to one of the preceding six claims, **characterised in that** a µ low regulation is envisaged at higher vehicle speeds for the calculation of the correcting variable, at which the friction potential of the drive wheel with the lower friction potential can be used as relevant for the calculation of the correcting variable.

11. Computer program product that causes an electronic control unit (13) to control a system according to one of the claims 1 to 3 in that the compensation unit is controlled according to the method according to one of the claims 4 to 10 when the electronic control unit (13) carries out program routines included in the program code of the computer program product.

12. Electronic control unit (13) for controlling a compensation unit according to the method according to one of the claims 4 to 10, with a program memory that is filled with data by a computer program product according to the preceding claim.

## Revendications

1. Système pour commander une unité d'équilibrage (1) sans différentiel d'au moins un essieu pouvant être entraîné parfois d'un véhicule, l'unité d'équilibrage (1) présentant
- un élément d'entrée (2)
- un premier élément de sortie (8L), qui peut être couplé avec l'élément d'entrée (2) par un premier embrayage à friction (10L) afin de transmettre la puissance d'entraînement à une première roue motrice (15L), et
- un deuxième élément de sortie (8R), qui peut être couplé avec l'élément d'entrée (2) par un deuxième embrayage à friction (10R) afin de transmettre la puissance d'entraînement à une deuxième roue motrice (15R),
un dispositif de commande étant prévu au moyen duquel les couples d'embrayage transmis par le premier embrayage (10L) et le deuxième embrayage (10R) peuvent être réglés en modifiant une variable réglante, et le dispositif de commande étant réglé de telle manière que le premier embrayage (10L) et le deuxième embrayage (10R) sont commandés au même niveau avec la variable réglante identique modifiée quelles que soient les conditions de conduite, **caractérisé en ce que** le système comprend une pompe hydraulique (12), la variable réglante est une pression hydraulique et le système est ajusté de telle manière que la modification de la variable réglante puisse être réglée pendant le fonctionnement du véhicule, quelles que soient les conditions de conduite, et de façon ciblée en changeant la vitesse de la pompe hydraulique (12).

2. Système selon la revendication précédente, **caractérisé en ce qu'**un actionneur d'embrayage (11L, 11R) est prévu pour l'actionnement du premier embrayage (10L) et l'actionnement du deuxième embrayage (10R) sur lequel la variable réglante agit afin d'actionner les embrayages (10L, 10 R), et qu'une seule unité de variable réglante (12) est prévue sur laquelle le niveau de la variable réglante agissant sur les deux embrayages (10L, 10R) est réglable.

3. Système selon l'une des revendications précédentes, **caractérisé en ce que** le système est un système sans organe de commande individuel (14L, 14R) via lequel la variable réglante pour le premier embrayage (10L) pourrait être réglée à un premier niveau et la variable réglante pour le deuxième embrayage (10R) à un deuxième niveau différent du premier niveau.

4. Procédé destiné à faire fonctionner une unité d'équilibrage (1) sans différentiel d'au moins un essieu pouvant être entraîné parfois d'un véhicule, l'unité d'équilibrage présentant
- un élément d'entrée (2)
- un premier élément de sortie (8L), qui peut être couplé avec l'élément d'entrée (2) par un premier embrayage à friction (10L) afin de transmettre la puissance d'entraînement à une première roue motrice (15L), et
- un deuxième élément de sortie (8R), qui peut être couplé avec l'élément d'entrée (2) par un deuxième embrayage à friction (10R) afin de transmettre la puissance d'entraînement à une deuxième roue motrice (15R),
et les couples d'embrayage du premier embrayage (10L) et du deuxième embrayage (10R) étant réglés par un dispositif de commande en modifiant la variable réglante, le premier embrayage (10L) et le deuxième embrayage (10R) étant entraînés au même niveau avec une variable réglante quelles que soient les conditions de conduite, **caractérisé en ce que** la variable réglante est une pression hydraulique et la variable réglante est modifiée pendant le fonctionnement du véhicule quelles que soient les conditions de conduite et de façon ciblée en changeant la vitesse de la pompe hydraulique (12).

5. Procédé selon la revendication précédente, **caractérisé en ce qu'**un actionneur d'embrayage (11L, 11R) est prévu pour l'actionnement du premier embrayage (10L) et l'actionnement du deuxième embrayage (10R), sur lequel la variable réglante agit afin d'actionner les embrayages (10L, 10R), et qu'une seule unité de variable réglante (12) est prévue pour régler le niveau de la variable réglante agissant sur les deux embrayages (10L, 10R).

6. Procédé selon l'une des revendications précédentes, **caractérisé en ce que** la variable réglante agit non seulement sur le premier embrayage (10L) mais également sur le deuxième embrayage (10R) sans interconnexion d'autres organes de commande individuels (14), via lesquels la variable réglante pour le premier embrayage (10L) pourrait être réglée à un premier niveau et la variable réglante pour le deuxième embrayage (10R) à un deuxième niveau différent du premier niveau.

7. Procédé selon l'une des revendications précédentes, **caractérisé en ce que** le potentiel d'adhérence de la roue intérieure est déterminé fondamentalement sur la base du calcul de la variable réglante dans les virages.

8. Procédé selon l'une des revendications précédentes, **caractérisé en ce que** le potentiel d'adhérence de la roue intérieure est déterminé fondamentalement sur la base du calcul de la variable réglante dans les virages en dessous d'une valeur seuil d'accélération latérale, le potentiel d'adhérence de la roue extérieure est déterminé fondamentalement sur la base du calcul de la variable réglante dans les virages en dessus de la valeur seuil d'accélération latérale.

9. Procédé selon l'une des cinq revendications précédentes, **caractérisées en ce qu'**une détection de différents potentiels d'adhérence des roues motrices est prévue (détection µ-split) et que le potentiel d'adhérence de la roue motrice au potentiel d'adhérence le plus élevé est considéré comme déterminant pour le calcul de la variable réglante (réglage µ-high) en accélérant de la position lors du calcul de la variable réglante.

10. Procédé selon l'une des six revendications précédentes, **caractérisé en ce qu'**à vitesse accrue du véhicule lors du calcul de la variable réglante, un réglage µ-low est prévu lors duquel le potentiel d'adhérence de la roue motrice au potentiel d'adhérence le moins élevé est considéré comme déterminant pour le calcul de la variable réglante.

11. Produit de programme informatique qui permet à une unité de commande électronique (13) de réguler un système selon l'une des revendications 1 à 3, de commander l'unité d'équilibrage selon le procédé de l'une des revendications 4 à 10 lorsque l'unité de commande électronique (13) effectue des routines de programme contenues dans le code de programme du produit de programme informatique.

12. Unité de commande électronique (13) destinée à la commande d'une unité d'équilibrage selon le procédé de l'une des revendications 4 à 10 avec une mémoire de programme qui est comprise dans le produit de programme informatique selon la revendication précédente.
